(19) 

Europäisches Patentamt
European Patent Office
Office européen des brevets

(11) **EP 4 749 779 A1**

(12) **EUROPEAN PATENT APPLICATION**

(43) Date of publication:
**27.05.2026 Bulletin 2026/22**

(21) Application number: **25213237.8**

(22) Date of filing: **04.11.2025**

(51) International Patent Classification (IPC):
*H01M 50/147* (2021.01)   *H01M 50/15* (2021.01)
*H01M 50/176* (2021.01)   *H01M 50/184* (2021.01)
*H01M 50/188* (2021.01)   *H01M 50/55* (2021.01)
*H01M 50/553* (2021.01)   *H01M 50/562* (2021.01)

(52) Cooperative Patent Classification (CPC):
**H01M 50/15; H01M 50/147; H01M 50/176;
H01M 50/184; H01M 50/188; H01M 50/55;
H01M 50/553; H01M 50/562;** Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **25.11.2024   CN 202422878838 U**

(71) Applicant: **AESC Japan Ltd.
Yokohama-shi, Kanagawa 220-0012 (JP)**

(72) Inventors:
• **ZHENG, Haoxian
  Jiangyin City, Wuxi City, Jiangsu 214443 (CN)**
• **YU, He
  Jiangyin City, Wuxi City, Jiangsu 214443 (CN)**

(74) Representative: **Becker, Eberhard
  Becker Kurig & Partner
  Patentanwälte mbB
  Bavariastraße 7
  80336 München (DE)**

(54) **BATTERY COVER PLATE AND CELL**

(57)   A battery cover plate and a secondary battery are provided. The battery cover plate includes a cover plate body (10) provided with an electrode terminal hole (11); and an electrode terminal assembly including an electrode terminal body (30) and a limiting piece (40). The electrode terminal body (30) is inserted into the electrode terminal hole (11). The limiting piece (40) is engaged with the electrode terminal body (30) in a thickness direction of the electrode terminal body (30) to fix the limiting piece (40) made of a first material. A portion of the electrode terminal body (30) engaged with the limiting piece (40) is made of a first conductive material (31). A hardness of the first material is greater than a hardness of the first conductive material (31).

FIG. 4

EP 4 749 779 A1

## Description

## BACKGROUND

Technical Field

The disclosure belongs to the field of battery technology and specifically relates to a battery cover plate and a secondary battery.

Description of Related Art

The rapid development of new energy technology has put forward higher requirements for cell technology. In particular, the improvement of the space utilization of cells is crucial for improving the energy density of cells. In one solution, the electrode terminal assembly includes a riveting member and an electrode terminal body, and the riveting member is directly riveted to the electrode terminal body passing through the top cap. Limited by the influence of the electrode terminal material, the thickness of the riveting portion is generally thick, so the overall height of the electrode terminal is greater. The internal space of the battery is thus occupied, and the energy density of the cell is affected.

## SUMMARY

In view of the abovementioned disadvantages of the related art, the disclosure aims to provide a battery cover plate and a secondary battery in which the height of the electrode terminal is reduced, and the energy density of the battery is increased.

To achieve the above and other related purposes, the disclosure provides a battery cover plate including a cover plate body and an electrode terminal assembly.

The cover plate body is provided with an electrode terminal hole.

The electrode terminal assembly includes an electrode terminal body and a limiting piece. The electrode terminal body is inserted into the electrode terminal hole. The limiting piece is engaged with the electrode terminal body in a thickness direction of the electrode terminal body to fix the limiting piece made of a first material. A portion of the electrode terminal body engaged with the limiting piece is made of a first conductive material. A hardness of the first material is greater than a hardness of the first conductive material.

In an optional embodiment of the disclosure, an insulating member at least partially disposed between the cover plate body and the electrode terminal assembly is further included, so as to insulate the electrode terminal assembly from the cover plate body.

In an optional embodiment of the disclosure, the insulating member is an insulating ring covering a side wall of the electrode terminal hole and regions on both inner and outer sides of the cover plate body close to an edge of the electrode terminal hole.

An inner end of the electrode terminal body is provided with a first flange (33) abutting against an inner end of the insulating ring. The limiting piece abuts against an outer end of the insulating ring.

In an optional embodiment of the disclosure, the limiting piece includes an engaging portion, a limiting portion, and a connecting portion. The engaging portion is engaged with a side wall of an outer periphery of the electrode terminal body. The limiting portion abuts against the outer end of the insulating ring. The engaging portion and the limiting portion are spaced apart by a distance in the thickness direction of the electrode terminal body. The engaging portion is closer to the inner end of the electrode terminal body than the limiting portion. The engaging portion and the limiting portion are integrally connected through the connecting portion.

In an optional embodiment of the disclosure, the electrode terminal body includes, in sequence from outside to inside in the thickness direction thereof, a first section, a second section, and a third section. Side walls of the first section and the third section protrude from a side wall of the second section. The engaging portion is clamped between an edge of the first section and an edge of the third section.

In an optional embodiment of the disclosure, a thickness of the engaging portion is h1, a thickness of the first section is H1, and the h1 and the H1 satisfy:

$$h1/H1 \geq 1/3.$$

In an optional embodiment of the disclosure, a thickness of the engaging portion is 0.1 mm to 3 mm.

In an optional embodiment of the disclosure, a distance between an end of the engaging portion close to a center of the electrode terminal body and the center of the electrode terminal body in a first direction is r11. A distance between an end of the engaging portion away from the center of the electrode terminal body and the center of the electrode terminal body in the first direction is r12. A distance between the side wall of the first section and the center of the electrode terminal body in the first direction is R1. The r11, the r12, and the R1 satisfy:

$$r11/R1 \leq 1$$

and/or

$$r12/R1 \geq 1.$$

The first direction is a direction perpendicular to the thickness direction of the electrode terminal body.

In an optional embodiment of the disclosure, an effective engaging length of the engaging portion is 0.3 mm to 10 mm and refers to a length of the engaging portion clamped between the edge of the first section and an edge of the second section.

In an optional embodiment of the disclosure, a distance between a side of the connecting portion close to a center of the electrode terminal body and the center of the electrode terminal body in a first direction is r21. A distance between a side of the connecting portion away from the center of the electrode terminal body and the center of the electrode terminal body in the first direction is r22. A distance between the side wall of the first section and the center of the electrode terminal body in the first direction is R1. A distance between the side wall of the third section and the center of the electrode terminal body in the first direction is R3. The r21, the r22, R1, and the R3 satisfy:

$$r21/R1 \geq 1$$

and/or

$$r22/R3 \leq 2.$$

The first direction is a direction perpendicular to the thickness direction of the electrode terminal body.

In an optional embodiment of the disclosure, a thickness of the connecting portion in a first direction is 0.1 mm to 3mm. The first direction is a direction perpendicular to the thickness direction of the electrode terminal body.

In an optional embodiment of the disclosure, a height of the connecting portion in the thickness direction of the electrode terminal body is a sum of thicknesses of the first section and the second section.

In an optional embodiment of the disclosure, a height of the connecting portion in the thickness direction of the electrode terminal body is 1 mm to 5 mm.

In an optional embodiment of the disclosure, a thickness of the limiting portion is h3, a thickness of the first section is H1, and the h3 and the H1 satisfy:

$$h3/H1 \leq 1.$$

In an optional embodiment of the disclosure, a thickness of the limiting portion is 0.1 mm to 3 mm.

In an optional embodiment of the disclosure, a distance between an end of the limiting portion close to a center of the electrode terminal body and the center of the electrode terminal body in a first direction is r31. A distance between an end of the limiting portion away from the center of the electrode terminal body and the center of the electrode terminal body in the first direction is r32. A distance between the side wall of the first section and the center of the electrode terminal body in the first direction is R1. The r31, the r32, and the R1 satisfy:

$$r31/R1 \geq 1$$

and/or

$$r32/R1 \leq 10.$$

The first direction is a direction perpendicular to the thickness direction of the electrode terminal body.

In an optional embodiment of the disclosure, an effective abutting length of the limiting portion is 1 mm to 10 mm and refers to a length of a region on the limiting portion that abuts against the insulating ring.

In an optional embodiment of the disclosure, an outer end of the electrode terminal body is flush with an outer end of the limiting portion or protrudes from the outer end of the limiting portion.

In an optional embodiment of the disclosure, two electrode terminal assemblies are provided. One of the electrode terminal assemblies is a positive electrode terminal assembly, and the other one of the electrode terminal assemblies is a negative electrode terminal assembly. An inner end of an electrode terminal body of the negative electrode terminal assembly is at least partially made of a second conductive material.

In an optional embodiment of the disclosure, the first conductive material extends to an inner side of the cover plate body and extends at least to an outer end of the first flange. The second conductive material wraps around an inner side of the first conductive material.

In an optional embodiment of the disclosure, a sealing ring is provided between the first flange and the cover plate body. A region on the first flange that contacts the sealing ring is made of a second conductive material, so that an inner space of the battery cover plate and the first conductive material are isolated by the second conductive material and the sealing ring.

In an optional embodiment of the disclosure, an inner end of the electrode terminal body is provided with a groove for accommodating a tab.

In an optional embodiment of the disclosure, an insulating plate is further provided on an inner side of the cover plate body. A region of the insulating plate corresponding to the electrode terminal assembly is provided with a through hole. The electrode terminal body passes through the through hole and extends to an inner side of the insulating plate to form an extension portion. The extension portion and the insulating plate are spaced apart and form a clamping cavity between the extension portion and the insulating plate for accommodating the tab.

In an optional embodiment of the disclosure, the limiting piece is an annular structure continuously distributed along an edge of the electrode terminal hole.

In an optional embodiment of the disclosure, the first material is steel, and the first conductive material is aluminum.

In an optional embodiment of the disclosure, the second conductive material is copper.

To achieve the above and other related purposes, the disclosure further provides a cell including the battery cover plate, the electrode assembly, and an outer casing connected to the battery cover plate to form a cavity for accommodating the electrode assembly. The electrode assembly is accommodated in the cavity, and a tab of the electrode assembly is electrically connected to the electrode terminal body.

The technical effects provided by the disclosure include the following. In the disclosure, the limiting piece made of a high-hardness material is engaged in the thickness direction of the electrode terminal body. Since the material of the limiting plate has greater hardness than the material of the electrode terminal body, under the condition of satisfying the same hardness requirements, the electrode terminal assembly with the added limiting piece has a thinner thickness than the electrode terminal assembly without the added limiting piece. Therefore, in this solution, even though the thickness of the electrode terminal assembly is decreased, the overall average hardness of the electrode terminal assembly still satisfies the hardness requirements of the electrode terminal assembly for external welding of electrical connection members. Due to the reduction of the overall height of the electrode terminal assembly, the space utilization of the battery is improved, that is, the volumetric energy density of the battery is enhanced.

## BRIEF DESCRIPTION OF THE DRAWINGS

    FIG. 1 is a perspective view of a battery cover plate according to an embodiment of the disclosure.
    FIG. 2 is an exploded view of the battery cover plate according to an embodiment of the disclosure.
    FIG. 3 is a top view of the battery cover plate according to an embodiment of the disclosure.
    FIG. 4 is a cross-sectional view taken along A-A in FIG. 3.
    FIG. 5 is an enlarged view of a portion I of FIG. 4.
    FIG. 6 is a dimension annotation view of the cross-sectional view shown in FIG. 4.
    FIG. 7 is a cross-sectional view taken along B-B in FIG. 3.
    FIG. 8 is a perspective view of an electrode terminal body according to an embodiment of the disclosure.
    FIG. 9 is a perspective view of a limiting piece according to an embodiment of the disclosure.
    FIG. 10 is a cross-sectional view of the battery cover plate according to another embodiment of the disclosure.

## DESCRIPTION OF THE EMBODIMENTS

It should be noted that the drawings provided in the following embodiments are merely schematically illustrating the basic idea of the disclosure. Therefore, the drawings only show components related to the disclosure rather than drawings which are depicted according to the numbers, shapes, and sizes of the components in actual implementation. In actual implementation, the types, numbers, and proportions of the components can be changed arbitrarily, and the component layout type may also be more complex.

In the expression of the disclosure, the terms "inner" and "outer" are based on the cavity of the battery, that is, the side or end close to the battery cavity is the inner side or inner end, and the side or end away from the battery cavity is the outer side or outer end.

Secondary batteries are also called rechargeable batteries or energy storage batteries, which refer to batteries that may be charged by external electrical energy and release electrical energy when needed. A secondary battery includes a casing, a cell, and a cover plate. The cell is accommodated in the casing, and the cover plate is connected to the casing to enclose the cell in the casing. The cover plate is generally provided with an electrode terminal. The inner end of the electrode terminal is connected to the tab of the cell, and an outer end of the electrode terminal is exposed outside the cover plate for connecting external electrical connection members, such as a busbar. In one solution, the electrode terminal assembly includes a riveting member and an electrode terminal body, and the riveting member is directly riveted to the electrode terminal body passing through the top cap. Limited by the influence of the electrode terminal material, the thickness of the riveting portion is generally thick, so that the overall height of the electrode terminal is greater. The internal space of the cell is thus occupied, and the energy density of the cell is affected. For this reason, in the disclosure, a limiting plate made of a high-hardness material is engaged in the thickness direction of the electrode terminal body. Since the material of the limiting plate has greater hardness than the material of the electrode terminal body, under the condition of satisfying the same hardness requirements, the electrode terminal assembly with the added limiting piece may have a thinner thickness than the electrode terminal assembly without the added limiting piece. Therefore, in this solution, even though the thickness of the electrode terminal assembly is decreased, the overall average hardness of the electrode terminal assembly may still satisfy the hardness requirements of the electrode terminal assembly for external welding of electrical connection members. Due to the reduction of the overall height of the electrode terminal assembly, the space utilization of the battery may be improved, that is, the volumetric energy density of the battery may be enhanced. In addition, a negative electrode terminal generally uses friction welding processes to connect metals of different materials (generally copper and aluminum) into one to satisfy the welding requirements of busbars and tabs. However, the negative electrode terminal is affected by the processing processes and the form of copper-aluminum bonding interface. There are risks of separation, high costs, and low production efficiency when the copper-aluminum bonding surface is directly subjected to force. For this reason, in the disclosure, the outer metal of the electrode terminal is extended to the inner side of the cover plate, and the outer metal is used to achieve position limitation between the electrode terminal and the inner side of the cover plate, so that the direct force on the bonding surface between different metals is avoided, and the reliability of the electrode terminal is improved.

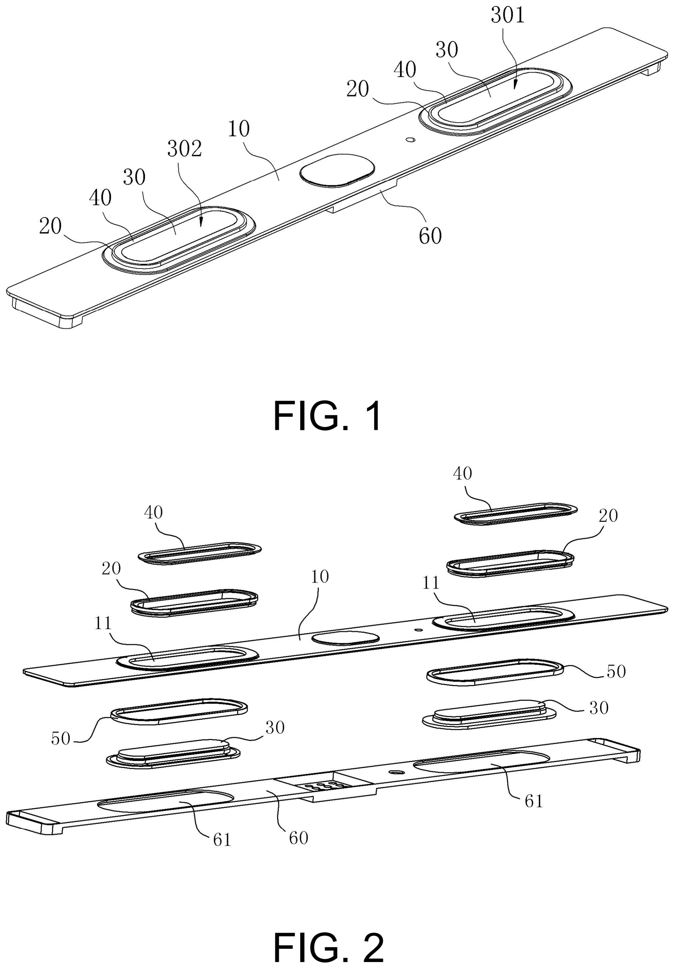

Referring to FIGS. 1 to 10, the technical solutions of the disclosure will be described in detail in the following paragraphs together with specific embodiments:

Embodiment 1

Referring to FIGS. 1 to 4 and 10, the embodiments of the disclosure provide a battery cover plate including a cover plate body 10, an insulating member, and an electrode terminal assembly. The battery cover plate is used to be fitted to a casing (not shown) to form a cavity for accommodating a cell 100. The electrode terminal assembly is electrically connected to a tab 110 of the cell 100 and is used to guide input and output terminals of the cell 100 to an outer side of the casing.

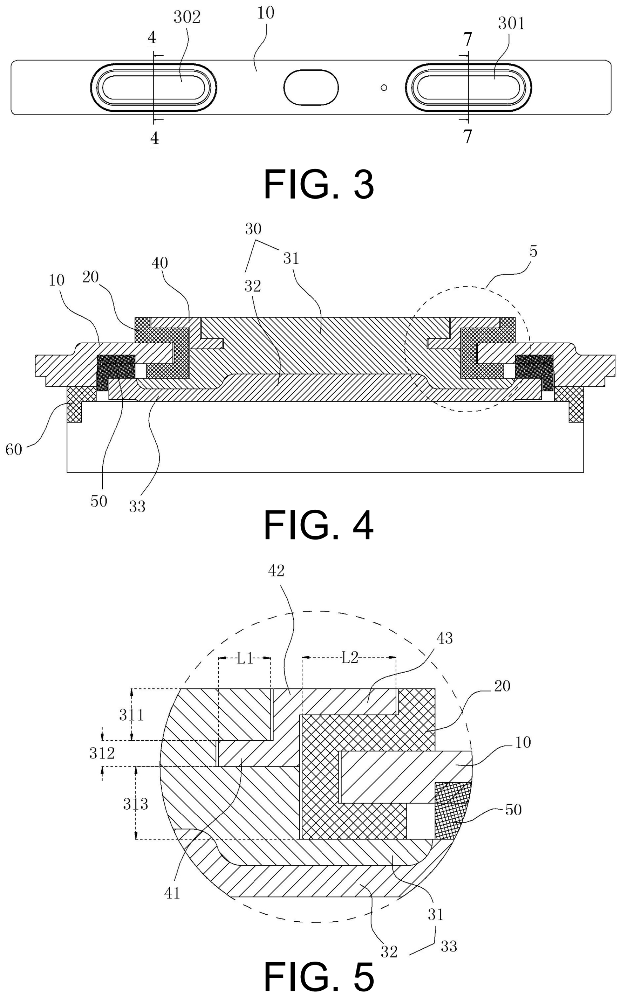

Referring to FIGS. 2 and 4, the cover plate body 10 is provided with an electrode terminal hole 11. In a specific embodiment, the cover plate body 10 may be made of a metal material, for example, may be an aluminum plate. An insulating member is at least partially disposed between the cover plate body 10 and the electrode terminal assembly to insulate the electrode terminal assembly from the cover plate body 10. In a specific embodiment, the insulating member may include, for example, an insulating ring 20 covering a side wall of the electrode terminal hole 11 and regions on both inner and outer sides of the cover plate body 10 close to an edge of the electrode terminal hole 11. In a specific embodiment, a material of the insulating ring 20 may be, for example, plastic. The electrode terminal assembly includes an electrode terminal body 30 and a limiting piece 40. The electrode terminal body 30 is inserted into the electrode terminal hole 11, and an inner end of the electrode terminal body 30 is provided with a first flange 33 abutting against an inner end of the insulating ring 20. The limiting piece 40 is made of a first material, and the conductivity of the first material has no special limitation and may be a conductive material or an insulating material. A least an outer end of the electrode terminal body 30 is made of a first conductive material 31, and a hardness of the first material is greater than a hardness of the first conductive material 31. The limiting piece 40 is engaged with the electrode terminal body 30 in a thickness direction of the electrode terminal body 30, and the limiting piece 40 abuts against an outer end of the insulating ring 20.

By providing an insulating member between the cover plate body 10 and the electrode terminal assembly, a short circuit between the electrode terminal assembly and the cover plate body 10 may be effectively prevented. By ensuring electrical isolation between the electrode terminal assembly and the cover plate body 10, safety risks caused by electrical contact are reduced.

In the disclosure, an integrated insulating ring 20 that covers both the side wall of the electrode terminal hole 11 and end surfaces on both sides of the hole opening is adopted. In this way, assembly gaps are reduced, and the electrical isolation performance of the battery cover plate is further improved. In addition, the integrated insulating ring 20 is more convenient for assembly of the battery cover plate, so that production efficiency is further improved. The material selection of the insulating ring 20 is flexible and may be plastic or other materials. This type of material not only provides favorable insulation performance, but also exhibits good mechanical performance and environmental resistance performance. As such, the insulating member is enabled to keep stable working performance in different application environments.

In the disclosure, the limiting piece 40 made of a high-hardness material is engaged in the thickness direction of the electrode terminal body 30. Since the material of the limiting piece 40 has greater hardness than the material of the electrode terminal body 30, under the condition of satisfying the same hardness requirements, the electrode terminal assembly with the added limiting piece 40 may have a thinner thickness than the electrode terminal assembly without the added limiting piece 40. Therefore, in this solution, even though the thickness of the electrode terminal assembly is decreased, the overall average hardness of the electrode terminal assembly may still satisfy the hardness requirements of the electrode terminal assembly for external welding of electrical connection members. Due to the reduction of the overall height of the electrode terminal assembly, the space utilization of the battery may be improved, that is, the volumetric energy density of the battery may be enhanced.

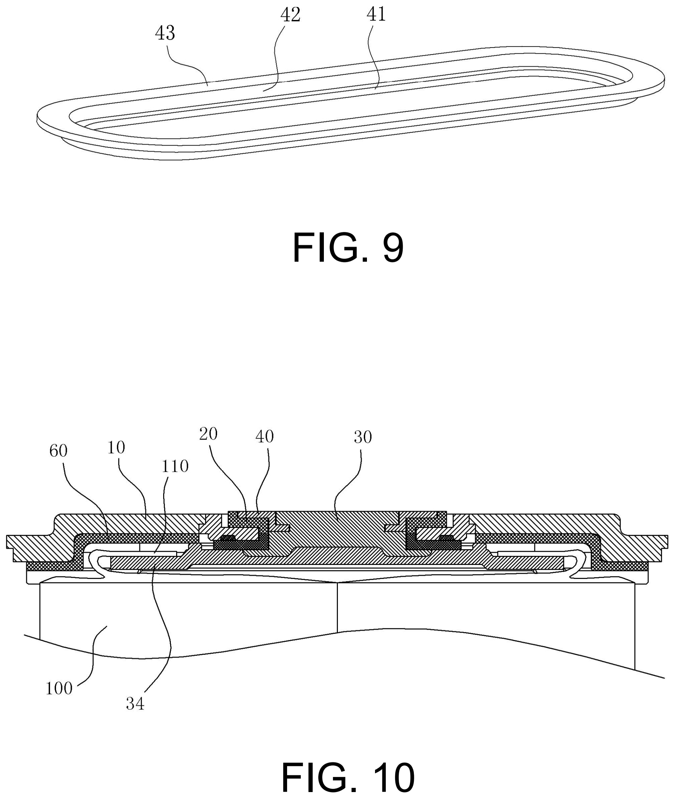

Referring to FIG. 5 and FIG. 9, in an optional embodiment of the disclosure, the limiting piece 40 includes an engaging portion 41, a limiting portion 43, and a connecting portion 42. The engaging portion 41 is engaged with the side wall of an outer periphery of the electrode terminal body 30, and the limiting portion 43 abuts against the outer end of the insulating ring 20. The engaging portion 41 and the limiting portion 43 are spaced apart by a distance in the thickness direction of the electrode terminal body 30, and the engaging portion 41 is closer to the inner end of the electrode terminal body 30 than the limiting portion 43. The engaging portion 41 and the limiting portion 43 are integrally connected through the connecting portion 42. In specific embodiments, the electrode terminal body 30 and the engaging portion 41 may be connected by riveting, for example. In this embodiment, the positional difference between the engaging portion 41 and the limiting portion 43 is utilized to transfer a riveting position of the electrode terminal body 30 to a region closer to the inner end of the electrode terminal body 30. In this way, while ensuring the riveting strength between the electrode terminal body 30 and the limiting piece 40, a protruding height of the outer end of the electrode terminal body 30 is reduced, so that the energy density of the battery is further improved. In addition, since one side of the limiting piece 40 abuts against the insulating ring 20 and the other side abuts against the electrode terminal body 30, the insulating ring 20, the limiting piece 40, and the electrode terminal body 30 may be sequentially stacked during assembly, and assembly efficiency is thereby improved.

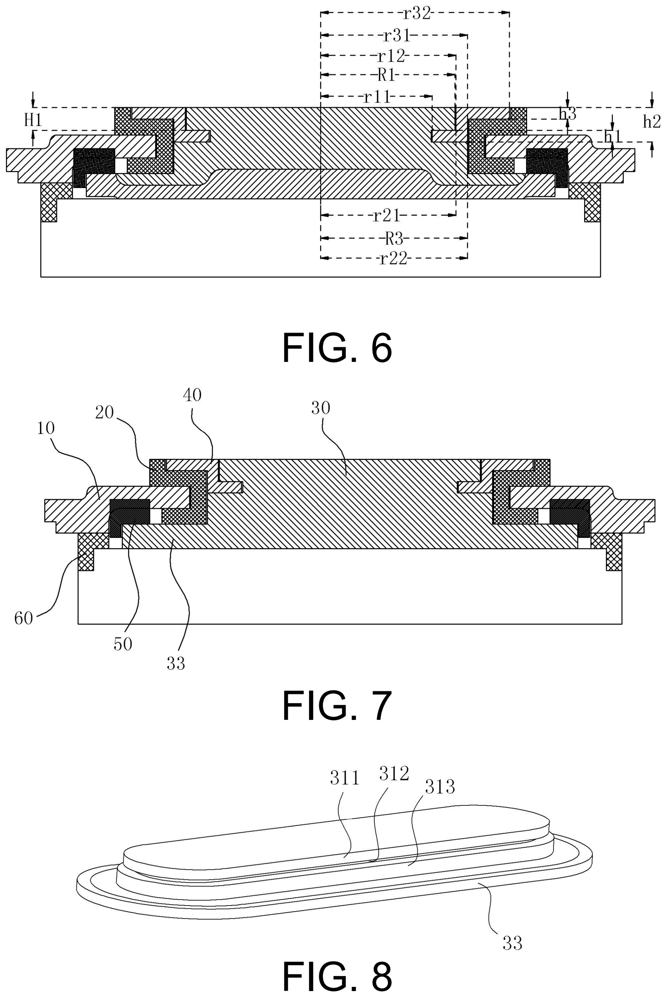

Referring to FIG. 5 and FIG. 8, in an optional embodiment of the disclosure, the electrode terminal body 30 includes, in sequence from outside to inside in the thickness direction thereof, a first section 311, a second section 312, and a third section 313. Side walls of the first section 311 and the third section 313 protrude from a side wall of the second section 312. The engaging portion 41 is clamped between an edge of the first section 311 and an edge of the third section 313. It should be understood that the above regional division of the electrode terminal body 30 is only for the convenience of describing the fitting relationship between the limiting piece 40 and the electrode terminal body 30, and does not mean that the electrode terminal body 30 necessarily has a plurality of independent structures. In specific embodiments, the first section 311, the second section 312, and the third section 313 may be, for example, an integral structure, where a portion of the first section 311 protruding from the side wall of the second section 312 may be formed by riveting. Specifically, before the electrode terminal body 30 is riveted, the side wall of the first section 311 may not protrude from the side wall of the second section 312. At this point, the engaging portion 41 is conveniently placed on the outside of the second section 312, and then the first section 311 is riveted to make the edge of the first section 311 press against the outside of the engaging portion 41, so stable connection between the limiting piece 40 and the electrode terminal body 30 is achieved.

Referring to FIG. 6, in an optional embodiment of the disclosure, a thickness of the engaging portion 41 is h1, a thickness of the first section 311 is H1, and a size of h1 is determined by the materials of the limiting piece 40 and the electrode terminal body 30. For instance, when the limiting piece 40 is a steel piece and the outer end of the electrode terminal body 30 is aluminum, since the strength of steel is approximately 3 times that of aluminum, when h1 and H1 satisfy $h1/H1 \geq 1/3$, the limiting piece 40 may achieve the same strength as or exceed the strength of the first section 311. In specific embodiments, the thickness h1 of the engaging portion 41 may be 0.1 mm to 3 mm.

Referring to FIG. 6, in an optional embodiment of the disclosure, a distance between one end of the engaging portion 41 close to a center of the electrode terminal body 30 and the center of the electrode terminal body 30 in a first direction is r11. The first direction is a direction perpendicular to the thickness direction of the electrode terminal body 30. A distance between one end of the engaging portion 41 away from the center of the electrode terminal body 30 and the center of the electrode terminal body 30 in the first direction is r12. A distance between the side wall of the first section 311 and the center of the electrode terminal body 30 in the first direction is R1. The r11, the r12, and the R1 satisfy $r11/R1<1$ and $r12/R1 \geq 1$, so as to ensure that the edge of the first section 311 may sufficiently compress the engaging portion 41. In a specific embodiment, as shown in FIG. 5, an effective engaging length L1 of the engaging portion 41 is 0.3 mm to 10 mm, and the effective engaging length L1 refers to a length of the engaging portion 41 clamped between the edge of the first section 311 and an edge of the second section 312.

Referring to FIG. 6, in an optional embodiment of the disclosure, a distance between a side of the connecting portion 42 close to the center of the electrode terminal body 30 and the center of the electrode terminal body 30 in the first direction is r21. A distance between a side of the connecting portion 42 away from the center of the electrode terminal body 30 and the center of the electrode terminal body 30 in the first direction is r22. A distance between the side wall of the first section 311 and the center of the electrode terminal body 30 in the first direction is R1. A distance between a side wall of the third section 313 and the center of the electrode terminal body 30 in the first direction is R3. The r21, the r22, R1, and the R3 satisfy $r21/R1 \geq 1$ and $r22/R3 \leq 2$. While ensuring that the connecting portion 42 has sufficient connection strength, a thickness of the connecting portion 42 is minimized. In a specific embodiment, the thickness of the connecting portion 42 in the first direction is 0.1 mm to 3 mm.

Referring to FIG. 6, in an optional embodiment of the disclosure, a height h2 of the connecting portion 42 in the thickness direction of the electrode terminal body 30 is a sum of thicknesses of the first section 311 and the second section 312. In a specific embodiment, the height h2 of the connecting portion 42 in the thickness direction of the electrode terminal body 30 is 1 mm to 5 mm. It should be understood that setting h2 as the sum of the thicknesses of the first section 311 and the second section 312 may keep an outer end surface of the electrode terminal assembly flat, which is more conducive to the connection between the electrode terminal assembly and external electrical connection members, such as welding with busbars. Setting h2 to 1 mm to 5 mm may ensure the riveting strength while minimizing the protruding height of the electrode terminal assembly to the greatest extent.

Referring to FIG. 6, in an optional embodiment of the disclosure, a thickness of the limiting portion 43 is h3, the thickness of the first section 311 is H1, and the h3 and the H1 satisfy $h3/H1 \leq 1$. H1 may be understood as the effective riveting thickness required for the electrode terminal body 30 to achieve sufficient riveting strength, and h3 may be understood as the effective riveting thickness required for the limiting piece 40 to achieve sufficient riveting strength. Since the material strength of the limiting piece 40 is greater than the material strength of the electrode terminal body 30, h3 may be set smaller to reduce the overall height of the electrode terminal assembly. In an optional embodiment of the disclosure, the thickness of the limiting portion 43 is 0.1 mm to 3 mm. Setting h3 to 0.1 mm to 3 mm may ensure riveting strength while minimizing the thickness of the limiting piece 40 to the greatest extent, so that the protruding height of the electrode terminal assembly is reduced.

Referring to FIG. 6, in an optional embodiment of the disclosure, a distance between one end of the limiting portion 43 close to the center of the electrode terminal body 30 and the center of the electrode terminal body 30 in the first direction is r31. A distance between one end of the limiting portion 43 away from the center of the electrode terminal body 30 and the center of the electrode terminal body 30 in the first direction is r32. The distance between the side wall of the first section 311 and the center of the electrode terminal body 30 in the first direction is R1. The r31, the r32, and the R1 satisfy $r31/R1 \geq 1$ and $r32/R1 \leq 10$, so that sufficient limiting between the limiting portion 43 and an outer side of the battery cover plate is ensured, and at the same time, material waste caused by the limiting portion 43 being excessively long is avoided. In an optional embodiment of the disclosure, as shown in FIG. 5, an effective abutting length L2 of the limiting portion 43 is 1 mm to 10mm, and the effective abutting length L2 refers to a length of a region on the limiting portion 43 that abut against the insulating ring 20.

In an optional embodiment of the disclosure, the outer end of the electrode terminal body 30 is flush with or protrudes from an outer end of the limiting portion 43, so as to facilitate subsequent welding between the electrode terminal body 30 and a busbar.

Referring to FIGS. 1, 3, 4, and 7, in an optional embodiment of the disclosure, two electrode terminal assemblies are provided, and both electrode terminal assemblies are disposed on the cover plate body. One of the electrode terminal assemblies is a positive electrode terminal assembly 301, and the other electrode terminal assembly is a negative electrode terminal assembly 302. Each of the positive electrode terminal assembly 301 and the negative electrode terminal assembly 302 includes the limiting piece 40, and the hardness of the limiting piece 40 is greater than that of both the electrode terminal body 30 of the positive electrode terminal assembly 301 and the electrode terminal body 30 of the negative electrode terminal assembly 302. For instance, the material of the positive electrode terminal body is aluminum, the material of the negative electrode terminal body is at least aluminum at the outer end and copper at the inner end or copper as a whole, and the material of the limiting piece is steel. Since the hardness of steel is greater than the hardness of both aluminum and copper, the protruding heights of both the positive electrode terminal assembly 301 and the negative electrode terminal assembly 302 may be reduced. In this embodiment, the inner end of the electrode terminal body 30 of the negative electrode terminal assembly 302 is made of a second conductive material 32. It should be understood that the materials of positive and negative tabs of the cell 100 are generally different. For instance, the positive tab 110 is generally aluminum, and the negative tab 110 is generally copper. Since the welding between copper and aluminum is not easy to implement, it is necessary to set an inner end of the negative electrode terminal assembly 302 to the same material as the negative tab 110, for example, by providing a layer of copper material at the inner end of the negative electrode terminal assembly 302.

Referring to FIG. 4, in an optional embodiment of the disclosure, the first conductive material 31 extends to an inner side of the cover plate body 10 and extends at least to an outer end of the first flange 33, and the second conductive material 32 wraps an inner side of the first conductive material 31. In the disclosure, the outer metal of the electrode terminal body 30 is extended to the inner side of the cover plate body 10, and the outer metal is used to achieve position limitation between the electrode terminal assembly and the inner side of the cover plate body 10, so that the direct force on the bonding surface between different metals is avoided, and the reliability of the electrode terminal body 30 is improved.

Referring to FIG. 4, in an optional embodiment of the disclosure, a sealing ring 50 is provided between the first flange 33 and the cover plate body 10. A region on the first flange 33 that contacts the sealing ring 50 is made of the second conductive material 32, so that an inner space of the battery cover plate and the first conductive material 31 are isolated by the second conductive material 32 and the sealing ring 50. In this way, corrosion of the primary battery that occurs when two different conductive materials simultaneously contact the electrolyte is prevented from occurring.

Referring to FIG. 2 and FIG. 4, in an optional embodiment of the disclosure, an insulating plate 60 is further provided on the inner side of the cover plate body 10, and a region of the insulating plate 60 corresponding to the electrode terminal assembly is provided with a through hole 61. In a further embodiment, the inner end of the electrode terminal body 30 is provided with a groove (not shown) for accommodating the tab 110. This enables the tab 110 to share partial space with the electrode terminal in the thickness direction of the electrode terminal, so that the overall height of the battery is reduced, and the volumetric energy density of the battery is further improved.

Referring to FIG. 10, in another optional embodiment of the disclosure, the electrode terminal body 30 passes through the through hole 61 and extends to an inner side of the insulating plate 60 to form an extension portion 34. The extension portion 34 and the insulating plate 60 are spaced apart and form a clamping cavity between the extension portion 34 and the insulating plate

60 for accommodating the tab 110. In this embodiment, the tab 110 and the electrode terminal assembly may be enabled to share a thickness space, and this embodiment is applicable to scenarios where the battery includes a plurality of cells 100.

Referring to FIG. 9, in an optional embodiment of the disclosure, the limiting piece 40 is an annular structure continuously distributed along the edge of the electrode terminal hole 11. The limiting piece 40 with the annular structure may tightly wrap around the edge of the electrode terminal hole 11, so that omnidirectional positioning support is provided, and position accuracy and stability of the electrode terminal assembly during installation are ensured. The continuously distributed annular structure may more precisely control the installation position and direction of the electrode terminal assembly, so that installation errors caused by insufficient local support are avoided. The limiting piece 40 with the annular structure is easier to be positioned and fixed during the assembly process, so that the assembly steps and time are reduced, and production efficiency is improved. The annular structure of the limiting piece 40 may enhance the structural strength between the electrode terminal assembly and the cover plate body 10. When subjected to external forces, the annular structure may uniformly disperse stress, so that local stress concentration is avoided, and overall mechanical strength and durability are improved. The limiting piece 40 with the annular structure may better seal the edge of the electrode terminal hole 11, serving the function of waterproof and dustproof. It should be understood that in some other embodiments, the limiting piece 40 may also be a plurality of independent structures arranged at intervals in a circumferential direction of the electrode terminal.

The disclosure further provides a cell including the battery cover plate, the electrode assembly, and an outer casing (not shown) connected to the battery cover plate to form a cavity for accommodating the electrode assembly. The electrode assembly is accommodated in the cavity, and the tab 110 of the electrode assembly of the cell 100 is electrically connected to the electrode terminal body 30. By using the battery cover plate with the above design, the overall height of the cell may be effectively reduced under the condition that the cell capacity is constant. After cells are assembled into a battery module or a battery pack, the gaps between the cells are smaller, so that the overall energy density of the battery module or the battery pack is improved.

Embodiment 2

This embodiment provides a cover plate body and a cell including the cover plate body, and the structure of which is substantially the same as the structure of the battery cover plate provided in Embodiment 1. The difference therebetween is that in this embodiment, the casing includes two cover plate bodies 10, and the positive electrode terminal assembly and the negative electrode terminal assembly are disposed on two different cover plate bodies 10. The design of two independent cover plate bodies 10 provides higher design and manufacturing flexibility. As such, manufacturers may flexibly adjust the positions and connection methods of the positive and negative electrode assemblies according to different application needs and performance specifications as well as customize different cell products, so that diversified market demands are satisfied.

Embodiment 3

This embodiment provides a cover plate body and a cell including the cover plate body, and the structure of which is substantially the same as the structure of the battery cover plate provided in Embodiment 1. The difference therebetween is that in this embodiment, one of the positive electrode terminal assembly and the negative electrode terminal assembly is disposed on the battery cover plate, and the other is disposed on the outer casing. By respectively arranging the positive and negative electrode terminal assemblies on the battery cover plate and the outer casing, the limited space may be better utilized, making the internal structure of the cell more compact while providing design flexibility. This layout is conducive to optimizing the overall dimensions and weight of the cell, so as to satisfy specific requirements for cell dimensions and weight in different applications. Similarly, this layout brings more diversity to cell design, and manufacturers may flexibly adjust the positions of the positive and negative electrode terminal assemblies according to specific application requirements and space limitations, so as to satisfy specific performance and installation needs.

In view of the foregoing, in the disclosure, the limiting plate made of a high-hardness material is engaged in the thickness direction of the electrode terminal body. Since the material of the limiting plate has greater hardness than the material of the electrode terminal body, under the condition of satisfying the same hardness requirements, the electrode terminal assembly with the added limiting piece may have a thinner thickness than the electrode terminal assembly without the added limiting piece. Therefore, in this solution, even though the thickness of the electrode terminal assembly is decreased, the overall average hardness of the electrode terminal assembly may still satisfy the hardness requirements of the electrode terminal assembly for external welding of electrical connection members. Due to the reduction of the overall height of the electrode terminal assembly, the space utilization of the battery may be improved, that is, the volumetric energy density of the battery may be enhanced. In the disclosure, the outer metal of the electrode terminal is extended to the inner side of the cover plate, and the outer metal is used to achieve position limitation between the electrode terminal and the inner side of the cover plate, so that the direct force on the bonding surface between different metals is avoided, and the reliability of the electrode terminal is improved.

**Claims**

1. A battery cover plate, **characterized in that** the battery cover plate comprising:

   a cover plate body (10), provided with an electrode terminal hole (11); and
   an electrode terminal assembly, comprising an electrode terminal body (30) and a limiting piece (40), wherein the electrode terminal body (30) is inserted into the electrode terminal hole (11), the limiting piece (40) is engaged with the electrode terminal body (30) in a thickness direction of the electrode terminal body (30) to fix the limiting piece (40) made of a first material, a portion of the electrode terminal body (30) engaged with the limiting piece (40) is made of a first conductive material (31), and a hardness of the first material is greater than a hardness of the first conductive material (31).

2. The battery cover plate according to claim 1, further comprising: an insulating member at least partially disposed between the cover plate body (10) and the electrode terminal assembly to insulate the electrode terminal assembly from the cover plate body (10), wherein the insulating member is an insulating ring (20) covering a side wall of the electrode terminal hole (11) and regions on both inner and outer sides of the cover plate body (10) close to an edge of the electrode terminal hole (11),
   an inner end of the electrode terminal body (30) is provided with a first flange (33) abutting against an inner end of the insulating ring (20), and the limiting piece (40) abuts against an outer end of the insulating ring (20).

3. The battery cover plate according to claim 2, wherein the limiting piece (40) comprises an engaging portion (41), a limiting portion (43), and a connecting portion (42), the engaging portion (41) is engaged with a side wall of an outer periphery of the electrode terminal body (30), the limiting portion (43) abuts against the outer end of the insulating ring (20), the engaging portion (41) and the limiting portion (43) are spaced apart by a distance in the thickness direction of the electrode terminal body (30), the engaging portion (41) is closer to the inner end of the electrode terminal body (30) than the limiting portion (43), and the engaging portion (41) and the limiting portion (43) are integrally connected through the connecting portion (42).

4. The battery cover plate according to claim 3, wherein the electrode terminal body (30) comprises, in sequence from outside to inside in the thickness direction thereof, a first section (311), a second section (312), and a third section (313), wherein side walls of the first section (311) and the third section (313) protrude from a side wall of the second section (312), and the engaging portion (41) is clamped between an edge of the first section (311) and an edge of the third section (313).

5. The battery cover plate according to claim 4, wherein the engaging portion (41) meets one of following conditions:

   (a) a thickness (h1) of the engaging portion (41) is h1, a thickness (H1) of the first section (311) is H1, and the h1 and the H1 satisfy:

   $$h1/H1 \geq 1/3;$$

   (b) a thickness (h1) of the engaging portion (41) is 0.1 mm to 3 mm;
   (c) a distance (r11) between an end of the engaging portion (41) close to a center of the electrode terminal body (30) and the center of the electrode terminal body (30) in a first direction is r11, a distance (r12) between an end of the engaging portion (41) away from the center of the electrode terminal body (30) and the center of the electrode terminal body (30) in the first direction is r12, a distance (R1) between the side wall of the first section (311) and the center of the electrode terminal body (30) in the first direction is R1, and the r11, the r12, and the R1 satisfy:

   $$r11/R1 \leq 1$$

   and/or

   $$r12/R1 \geq 1,$$

   wherein the first direction is a direction perpendicular to the thickness direction of the electrode terminal body (30); and
   (d) an effective engaging length (L1) of the engaging portion (41) is 0.3 mm to 10 mm and refers to a length of the engaging portion (41) clamped between the edge of the first section (311) and an edge of the second section (312).

6. The battery cover plate according to claim 4, wherein the connecting portion (42) meets one of following situations:

   (a) a distance (r21) between a side of the connecting portion (42) close to a center of the electrode terminal body (30) and the center of the electrode terminal body (30) in a first direction is r21, a distance (r22) between a side of the connecting portion (42) away from the center of the electrode terminal body (30) and the center of the electrode terminal body (30) in the first direction is r22, a distance (R1) between the side wall of the first section (311) and the center of the electrode terminal body (30) in the first direction is R1, a distance (R3) between the side wall of the third section (313) and the center of the electrode terminal body (30) in the first direction is R3, and the r21, the r22, the R1, and the R3 satisfy:

$$r21/R1 \geq 1$$

and/or

$$r22/R3 \leq 2,$$

wherein the first direction is a direction perpendicular to the thickness direction of the electrode terminal body (30);
(b) a thickness of the connecting portion (42) in a first direction is 0.1 mm to 3mm, and the first direction is a direction perpendicular to the thickness direction of the electrode terminal body (30);
(c) a height (h2) of the connecting portion (42) in the thickness direction of the electrode terminal body (30) is a sum of thicknesses of the first section (311) and the second section (312); and
(d) a height (h2) of the connecting portion (42) in the thickness direction of the electrode terminal body (30) is 1 mm to 5 mm.

7.  The battery cover plate according to claim 4, wherein the limiting portion (43) meets at least one of following conditions:

(a) a thickness (h3) of the limiting portion (43) is h3, a thickness (H1) of the first section (311) is H1, and the h3 and the H1 satisfy:

$$h3/H1 \leq 1;$$

(b) a thickness of the limiting portion (43) is 0.1 mm to 3 mm; and
(c) a distance (r31) between an end of the limiting portion (43) close to a center of the electrode terminal body (30) and the center of the electrode terminal body (30) in a first direction is r31, a distance (r32) between an end of the limiting portion (43) away from the center of the electrode terminal body (30) and the center of the electrode terminal body (30) in the first direction is r32, a distance (R1) between the side wall of the first section (311) and the center of the electrode terminal body (30) in the first direction is R1, and the r31, the r32, and the R1 satisfy:

$$r31/R1 \geq 1$$

and/or

$$r32/R1 \leq 10,$$

wherein the first direction is a direction perpendicular to the thickness direction of the electrode terminal body (30).

8.  The battery cover plate according to claim 4, wherein an effective abutting length (L2) of the limiting portion (43) is 1 mm to 10 mm and refers to a length of a region on the limiting portion (43) that abuts against the insulating ring (20).

9.  The battery cover plate according to claim 3, wherein the outer end of the electrode terminal body (30) is flush with an outer end of the limiting portion (43) or protrudes from the outer end of the limiting portion (43).

10. The battery cover plate according to claim 2, wherein two electrode terminal assemblies are provided, one of the electrode terminal assemblies is a positive electrode terminal assembly (301), the other one of the electrode terminal assemblies is a negative electrode terminal assembly (302), and an inner end of an electrode terminal body (30) of the negative electrode terminal assembly (302) is at least partially made of a second conductive material (32).

11. The battery cover plate according to claim 10, wherein the first conductive material (31) extends to an inner side of the cover plate body (10) and extends at least to an outer end of the first flange (33), and the second conductive material (32) wraps around an inner side of the first conductive material (31).

12. The battery cover plate according to claim 10, wherein a sealing ring (50) is provided between the first flange (33) and the cover plate body (10), and a region on the first flange (33) that contacts the sealing ring (50) is made of a second conductive material (32), so that an inner space of the battery cover plate and the first conductive material (31) are isolated by the second conductive material (32) and the sealing ring (50); and/or
wherein an inner end of the electrode terminal body (30) is provided with a groove for accommodating a tab (110).

13. The battery cover plate according to claim 1, wherein an insulating plate (60) is further provided on an inner side of the cover plate body (10), a region of the insulating plate (60) corresponding to the electrode terminal assembly is provided with a through hole (61), the electrode terminal body (30) passes through the through hole (61) and extends to an inner side of the insulating plate (60) to form an extension portion (34), and the extension portion (34) and the insulating plate (60) are spaced apart and form a clamping cavity between the extension portion (34) and the insulating plate (60) for accommodating the tab (110); and/or

wherein the limiting piece (40) is an annular structure continuously distributed along an edge of the electrode terminal hole (11); and/or
wherein the first material is steel, and the first conductive material (31) is aluminum; and/or
wherein the second conductive material (32) is copper.

14. A cell (100), **characterized in that** the cell (100) comprising the battery cover plate according to any one of claims 1 to 13, an electrode assembly, and an outer casing connected to the battery cover plate to form a cavity for accommodating the electrode assembly, wherein the electrode assembly is accommodated in the cavity, and a tab (110) of the electrode assembly is electrically connected to the electrode terminal body (30).

FIG. 1

FIG. 2

FIG. 3

FIG. 4

FIG. 5

FIG. 6

FIG. 7

FIG. 8

FIG. 9

FIG. 10

**EUROPEAN SEARCH REPORT**

Application Number

EP 25 21 3237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 581 494 A (SHENZHEN HAICHEN ENERGY STORAGE CONTROL TECH CO LTD ET AL.) 11 August 2023 (2023-08-11) * paragraphs [0044] - [0049], [0051] - [0053], [0077], [0078]; figures 1,3-6 * | 1-14 | INV. H01M50/147 H01M50/15 H01M50/176 H01M50/184 H01M50/188 |
| X | CN 213 546 427 U (SHANGHAI LANJUN NEW ENERGY TECHNOLOGY CO LTD) 25 June 2021 (2021-06-25) * paragraphs [0001], [0002], [0034] - [0043]; figures 1,2 * | 1-14 | H01M50/55 H01M50/553 H01M50/562 |
| X | US 5 585 207 A (WAKABE MASAYUKI [JP] ET AL) 17 December 1996 (1996-12-17) | 1,13,14 | |
| A | * column 8, line 60 - line 67 * * column 9, line 19 - line 40 * | 2-12 | |
| A | JP 2015 088372 A (TOYOTA IND CORP) 7 May 2015 (2015-05-07) * the whole document * * paragraph [0029] * | 1-14 | |

TECHNICAL FIELDS SEARCHED (IPC)

H01M

The present search report has been drawn up for all claims

| Place of search | Date of completion of the search | Examiner |
|---|---|---|
| Munich | 26 March 2026 | Posch, Patrick |

EPO FORM 1503 03.82 (P04C01)

## ANNEX TO THE EUROPEAN SEARCH REPORT
## ON EUROPEAN PATENT APPLICATION NO.

EP 25 21 3237

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2026

| Patent document cited in search report | | Publication date | Patent family member(s) | | Publication date |
|---|---|---|---|---|---|
| CN 116581494 | A | 11-08-2023 | NONE | | |
| CN 213546427 | U | 25-06-2021 | NONE | | |
| US 5585207 | A | 17-12-1996 | DE | 69527735 T2 | 05-12-2002 |
| | | | EP | 0674351 A2 | 27-09-1995 |
| | | | EP | 0969536 A2 | 05-01-2000 |
| | | | US | 5585207 A | 17-12-1996 |
| | | | US | 6136464 A | 24-10-2000 |
| JP 2015088372 | A | 07-05-2015 | JP | 6149692 B2 | 21-06-2017 |
| | | | JP | 2015088372 A | 07-05-2015 |

EPO FORM P0459

For more details about this annex : see Official Journal of the European Patent Office, No. 12/82